# EUROPÄISCHE PATENTSCHRIFT

(11) **EP 2 932 515 B1**
(45) Veröffentlichungstag und Bekanntmachung des Hinweises auf die Patenterteilung: **11.12.2019**
(21) Anmeldenummer: 13780113.0
(22) Anmeldetag: 17.10.2013
(51) Int. Cl.: H01F 7/16, F16K 31/06, G05D 16/20, H01F 7/127

(54) **ELEKTROMAGNETISCHES STELLGLIED**
ELECTROMAGNETIC ACTUATOR
ACTIONNEUR ÉLECTROMAGNÉTIQUE

(30) Priorität: 17.12.2012 DE 102012223430
(43) Veröffentlichungstag der Anmeldung: 21.10.2015
(73) Patentinhaber: Robert Bosch GmbH, 70442 Stuttgart (DE)
(72) Erfinder: SCHUDT, Klaus, 74226 Nordheim (DE)
(86) Internationale Anmeldenummer: PCT/EP2013/071692
(87) Internationale Veröffentlichungsnummer: WO 2014/095117

(56) Entgegenhaltungen:
- WO-A1-99/11918
- DE-A1- 2 809 975
- DE-A1-102006 011 078
- DE-A1-102007 047 422

## Beschreibung

### Stand der Technik

In modernen PKW-Automatikgetrieben werden hydraulisch betätigte Kupplungen zum Wechsel der Gänge eingesetzt. Damit Schaltvorgänge ruckfrei und für den Fahrer unmerklich ablaufen ist es notwendig, den hydraulischen Druck an den Kupplungen entsprechend vorgegebener Druckrampen mit hoher Druckpräzision einzustellen. Der hierfür erforderliche Druck kann mit Hilfe von hydraulischen Schieberventilen bereitgestellt werden, wie sie beispielsweise aus der WO 2011/012366 A1 bekannt sind. Diese Schieberventile können entweder über ein Pilotventil oder direkt über ein elektromagnetisches Stellglied betätigt werden. Elektromagnetische Stellglieder können darüber hinaus auch zur Betätigung von als Sitzventilen ausgebildeten Schaltventilen in Automatikgetrieben oder andere Anwendungen eingesetzt werden. Die einwandfreie Funktion und Installation elektromagnetischer Stellglieder im Automatikgetriebe erfordert besondere Maßnahmen. Oft wird beispielsweise zur Betätigung eines Schieberventils ein Kraftübertragungsglied benötigt, welches in der Regel als Betätigungselement oder Betätigungsstift bezeichnet wird.

In der DE 28 09 975 A1 wird ein als Magnetstellwerk bezeichnetes elektromagnetisches Stellglied gezeigt, das einen Gleichstrom-Elektromagneten umfasst, mit dessen Anker die Regelstange verbunden ist, einen induktiven Weggeber mit einer Aufnehmerspule und einem mit der Regelstange verbundenen Geberstab und eine Rückstellfeder, deren Rückstellkraft der Anzugskraft des Magneten entgegenwirkt.

Die WO99/11918 zeigt ein weiteres elektromagnetisches Stellglied, das Teil eines Emissionskontrollventils für Kraftfahrzeuge ist. Es umfasst einen Elektromagneten mit einem Anker, ein in dem Anker eingepasstes aber nicht fest mit dem Anker verbundenes Verbindungsglied und einen Betätigungsstift, an dem ein Ventildeckel ausgebildet ist. Das Verbindungsglied dient als Federteller für eine Rückstellfeder als auch als Justagevorrichtung für das Ventil.

Aus der DE 10 2006 011 078 A1 ist ein dort als Hubmagnet bezeichnetes elektromagnetisches Stellglied bekannt, das eine Magnetspule aufweist, welche einen Spulenkörper mit einer daran angeordneten Spulenwicklung und eine sich in einer axialen Richtung erstreckende Zentralausnehmung aufweist, in der ein Anker in einer Lagerhülse verschiebbar angeordnet ist. An einem axialen Ende des Spulenkörpers ist ein die Zentralausnehmung abdeckendes Abschlussstück ausgebildet, das aus einem Konus und einer Konusscheibe besteht. In dem Abschussstück ist eine Betätigungsstange verschiebbar gelagert, wobei der Anker durch eine Betätigung der Magnetspule bewegbar ist, so dass eine von dem Anker des elektromagnetischen Stellgliedes aufgebrachte Kraft auf die Betätigungsstange übertragbar ist. Bei dem bekannten elektromagnetischen

Stellglied ist die Betätigungsstange über einen Pressverbund fest mit dem Anker verbunden.

Die aus der DE 10 2006 006 011 078 A1 bekannte Betätigungsstange ist mit einem Bund versehen, der durch eine aufwändige Zerspanung hergestellt wird. Da der Bund nicht während der Montage der Betätigungsstange am Anker gebildet wird, sondern zuvor zerspanend hergestellt werden muss, ist eine an die individuellen Gegebenheiten angepasste, flexible Anpassung des Längenmaßes der aus dem Anker hervorstehenden Betätigungsstange während der Montage nicht möglich. Der Bund dient zugleich auch dazu ein magnetisches Kleben zu vermeiden, in dem durch die Anordnung des Bundes zwischen einem Pol des Ankers und einem gegenüberliegenden Pol des Abschlussstückes erreicht wird, dass sich die Flächen der beiden Pole nicht berühren können. Da der Bund hierzu aus unmagnetischem Material gefertigt werden muss, muss dann folglich auch die gesamte Betätigungsstange aus unmagnetischem Material gefertigt werden, was zur Folge hat, dass das Material der Betätigungsstange bezüglich des Kraftübertragungsvermögens und des Verschleißes in Hinblick auf Festigkeit und Härte nicht optimal ausgewählt werden kann. Darüber hinaus weist das aus einem unmagnetischen Material hergestellte Betätigungselement eine größere Wärmeausdehnung auf als das aus magnetischem Material hergestellte Abschlussstück, in dem die Betätigungsstange in einer Bohrung gleitverschiebbar gelagert ist. Dies hat zur Folge, dass sich mit zunehmender Temperatur das von der Betätigungsstange benötigte Laufspiel verkleinert und in einem Spalt zwischen der Bohrung und der Betätigungsstange befindliche Partikel ein Klemmen der Betätigungsstange bewirken können.

Da weiterhin der Bund nur eine sehr geringe Eigenelastizität aufweist, werden bei Stoßbeanspruchung die auftretenden Impulskräfte sehr hoch. Um einen Verschleiß zu vermeiden, muss die Betätigungsstange daher mit relativ großem Durchmesser ausgeführt werden, um die auftretenden Flächenpressungen klein zu halten. Aufgrund der Größe der Betätigungsstange ist diese relativ teuer und verursacht bei einer Bewegung des Ankers in der Bohrung eine nicht unerhebliche Pumpwirkung, welche verschmutztes Öl in den Magnet transportieren kann.

Durch den festen Verbund zwischen Anker und Betätigungsstange muss die Gleitlagerung der Betätigungsstange ferner magnetische Querkräfte aufnehmen, was eine erhöhte magnetische Krafthysterese zur Folge hat. Bei der bekannten Lösung besteht darüber hinaus auch die Gefahr, dass die fertigungsbedingte Exzentrizität zwischen den Lagerstellen am Anker und an der Betätigungsstange ein Klemmen bewirken kann. Um ein Klemmen der bewegten Teile zu vermeiden, muss das Gleitlager der Betätigungsstange relativ kurz ausgeführt werden, damit Schrägstellungen möglich werden, welche gegebenenfalls eine fertigungsbedingte Exzentrizität ausgleichen kann. Das kurze Lager hat jedoch den Nachteil, dass die schmutzabdichtende Wirkung deutlich verschlechtert wird.

Aufgabe der Erfindung ist es, ein elektromagnetisches Stellglied bereitzustellen, dass die oben beschriebenen Nachteile vermeidet.

### Offenbarung der Erfindung

Die obige Aufgabe wird durch ein erfindungsgemäßes elektromagnetisches Stellglied mit den Merkmalen des Oberbegriffs des Anspruchs 1 gelöst, bei dem ein zweiteilig ausgebildetes Betätigungselement vorgesehen ist, das einen in einem Abschlussstück der Magnetspule gelagerten Betätigungsstift sowie ein Trennstück aufweist, das an einem aus dem Abschlussstück in Richtung des Ankers vorstehenden Endabschnitt des Betätigungsstiftes fest mit dem Betätigungsstift verbundenen ist und bei einer Betätigung der Magnetspule von dem Anker beaufschlagt ist.

### Vorteile der Erfindung

Durch den zweitteiligen Aufbau des Betätigungselementes wird vorteilhaft erreicht, dass für den Betätigungsstift und das Trennstück unterschiedliche Materialien ausgewählt werden können. So kann der Betätigungsstift beispielsweise aus gehärtetem Stahl ausgebildet werden, wobei insbesondere auf für die Verwendung in einem Nadelrollenlager im Handel angebotene, preiswerte Nadelrollen aus gehärtetem Stahl zurückgegriffen werden kann. Das Trennstück kann vorteilhaft aus unmagnetischem Stahl gefertigt werden.

Der Betätigungsstift ist erfindungsgemäß mit dem Anker nicht fest verbunden und verfügt über eine eigene Lagerung unabhängig vom Lager des Ankers, so dass auf die Lagerung des Betätigungsstiftes keine magnetischen Querkräfte wirken und kein nachteiliges Verkanten des Betätigungselementes zwischen einer Lagerstelle für den Anker und einer Lagerstelle für den Betätigungsstift auftreten kann.

Das Betätigungselement dichtet vorteilhaft den Elektromagneten weitgehend hydraulisch ab, so dass im Getriebeöl befindlicher Zahnradabrieb nicht ins Innere des Elektromagneten eindringt kann. Diese Abdichtung kann technisch als Spaltdichtung in Form einer Spielpassung ausgeführt werden. Hierbei ist es vorteilhaft, dass der Gleitlagerspalt aufgrund der zweiteiligen Ausgestaltung des Betätigungselementes lang und mit geringem Laufspiel ausgeführt werden kann. Der Betätigungsstift des Betätigungselementes kann vorteilhaft in Hinblick auf Form und Material dahingehend optimiert werden, dass das Betätigungselement reibungsarm und verschleißfrei gelagert ist und eine Beeinträchtigung der Magnetkraft durch Reibungsverluste vermieden wird.

Dadurch, dass als Material des Betätigungsstiftes unabhängig von der Ausgestaltung des Trennstücks ein relativ hartes Material gewählt werden kann, wird erreicht, dass bei schnellen Druckänderungen von dem Betätigungselement hohe Kräfte übertragen werden können, die bei der Verwendung des elektromagnetischen Stellgliedes beispielsweise in Kombination mit einem Schieberventil durch Impulsüberträge zwischen dem Betätigungselement und dem Schieberventil im dynamischen Betrieb entstehen.

Bei der Auswahl des Materials des Betätigungsstiftes kann dieses vorteilhaft so ausgewählt werden, dass sich die Wärmeausdehnung des Betätigungsstiftes auch bei geringem Spiel des Betätigungsstiftes in dem Abschlussstück möglichst wenig von der Wärmeausdehnung des Materials der im Abschlussstück ausgebildeten Lagerstelle unterscheiden. Bei dem Abschlussstück kann es sich beispielsweise um eine magnetische Flussscheibe des elektromagnetischen Stellgliedes handeln. Durch die beschriebene Maßnahme wird vorteilhaft vermieden, dass sich bei Temperaturwechselbelastungen spaltgängige Mikropartikel, wie Abrieb und Schmutz aus dem Getriebeöl in dem Gleitlagerspalt des Betätigungselements festklemmen. Vorteilhafte Ausgestaltungen und Weiterbildungen der Erfindung werden durch die in den abhängigen Ansprüchen aufgeführten Merkmale ermöglicht.

Erfindungsgemäß ist das Trennstück unabhängig von der Materialauswahl für den Betätigungsstift aus einem unmagnetischen Material, insbesondere aus unmagnetischem Metall und ganz insbesondere aus unmagnetischem Stahl hergestellt. Durch das unmagnetische Trennstück wird vorteilhaft ein magnetisches Kleben des Ankers am Joch des Polrohres vermieden.

Vorteilhaft weist das Trennstück zumindest einen seitlich abstehenden Vorsprung auf, welcher bei einer Beaufschlagung des Trennstücks durch den Anker durch Anlage an dem Abschlussstück oder einem damit verbunden Bauteil den maximalen Verschiebungsweg des Betätigungsstiftes in dem Abschlussstück begrenzt. Hierdurch lässt sich der maximale Verschiebungsweg des Betätigungsstiftes einstellen. Außerdem wird vorteilhaft erreicht, dass der Betätigungsstift in Hinblick auf Transport und Montage verliersicher ausgeführt ist.

In einem besonders vorteilhaften Ausführungsbeispiel weist das elektromagnetische Stellglied ein topfförmig ausgebildetes Trennstück auf. Das topfförmige Trennstück kann kostengünstig beispielsweise durch Tiefziehen hergestellt werden, wobei vorzugsweise ein unmagnetisches Material verwandt wird, um ein magnetisches Kleben zu vermeiden. Das topfförmige Gleitstück weist vorteilhaft eine hohe Eigenelastizität bei einer Kraftbeaufschlagung in der axialen Richtung auf. Die auftretenden Impulskräfte bei Stößen bleiben dadurch vorteilhaft gering und der Betätigungsstift und das Trennstück können auch durch relativ kleine Bauteile gebildet werden.

Der Betätigungsstift kann in sehr einfacher Weise mit einem Endabschnitt in das topfförmige Trennstück eingesetzt werden. Besonders vorteilhaft kann das topfförmige Trennstück auf den Betätigungsstift aufgepresst oder aufgeschrumpft werden, wobei eine feste Verbindung zwischen dem Betätigungsstift und dem Trennstück erreicht wird. Das Trennstück ist also nach dem Aufpressen in Hinblick auf die im Betrieb auftretenden Maximalkräfte unbeweglich an dem Betätigungsstift befestigt. Das aufgepresste topfförmige Trennstück wirkt vorteilhaft gleichzeitig als Verlierschutz, damit sich während des Transports der Betätigungsstift nicht vom Magnet lösen kann.

Das topfförmige Trennstück weist vorteilhaft einen Zylindermantel, einen Boden und an seinem von dem Boden abgewandten Ende einen seitlich abstehenden Kragen auf, der bei einer Beaufschlagung des unmagnetischen Trennstücks durch den Anker durch Anlage an dem Abschlussstück oder einem damit verbunden Bauteil den maximalen Verschiebungsweg des Betätigungsstiftes in dem Abschlussstück begrenzt.

Dadurch, dass der Betätigungsstift eine Länge L1 aufweist und dass topfförmige Trennstück auf den Betätigungsstift soweit aufgepresst oder aufgeschrumpft ist, dass der Abstand zwischen dem Kragen und einem von dem Anker abgewandten Ende des Betätigungsstiftes ein Längenmaß bilden, das in Hinblick auf die axiale Dicke des Abschlussstückes so eingestellt ist, dass der Betätigungsstift bei Anlage des Kragens an dem Abschlussstück oder einem damit verbunden Bauteil um ein definiertes Abstandsmaß L3 auf der von dem Anker abgewandten Seite des Abschlussstücks aus diesem hervorsteht, wird vorteilhaft erreicht, dass beim Einpressprozess die relevante Länge des Betätigungsstiftes sehr genau und abhängig von den Abmessungen des Abschlussstückes eingestellt werden kann, so dass Teile- und Prozessschwankungen ausgeglichen werden können. Da die eigensetzten Elektromagnete des elektromagentischen Stellgliedes oft keinen waagrechten Kraft-Weg-Verlauf aufweisen, sondern mit einer positionsabhängigen Kraft ausgeführt sind, bestimmt das Abstandsmaß L3 die Höhe der Magnetkraft und damit die Genauigkeit der einzustellenden Druckrampe eines hydraulischen Druckregelventils. Bei dem erfindungsgemäßen elektromagentischen Stellglied kann das Abstandsmaß L3 sehr genau und vorteilhafterweise individuell eingestellt werden.

Bei einem vorteilhaften Ausführungsbeispiel ist ein in die Zentralausnehmung des Spulenkörpers eingesetztes Polrohr vorgesehen, an dessen Außenumfang eine Ausnehmung ausgebildet ist, wobei der Anker in dem Polrohr verschiebbar gelagert ist und ein dem Anker auf der Seite des Abschlusstückes zugewandtes Ende des Polrohres ein einstückig an dem Polrohr ausgebildetes Joch aufweist, wobei in dem Joch eine Durchgangsöffnung ausgebildet ist, deren Durchmesser derart bemessen ist, dass das Trennstück in der Durchgangsöffnung hin und her beweglich ist. Das Joch und der Anker bilden vorteilhaft einander zugewandte Polflächen aus, deren maximale Annäherung durch die Länge des Trennstücks bei Anlage an dem Abschlussstück begrenzt wird.

Besonders vorteilhaft ist das elektromagnetische Stellglied geeignet zur Verwendung in einem elektromagnetischen Druckregelventil, insbesondere zur Einstellung eines Hydraulikdrucks in einer Hydraulikleitung eines Kraftfahrzeuggetriebes.

### Kurze Beschreibung der Zeichnungen

Fig. 1 zeigt ein Ausführungsbeispiels für ein erfindungsgemäßes elektromagnetische Stellglied mit einem Elektromagneten mit Polrohr,
Fig. 2 zeigt anhand einer vergrößerten Detaildarstellung den Aufbau des Betätigungselementes aus Fig. 1.

### Ausführungsformen der Erfindung

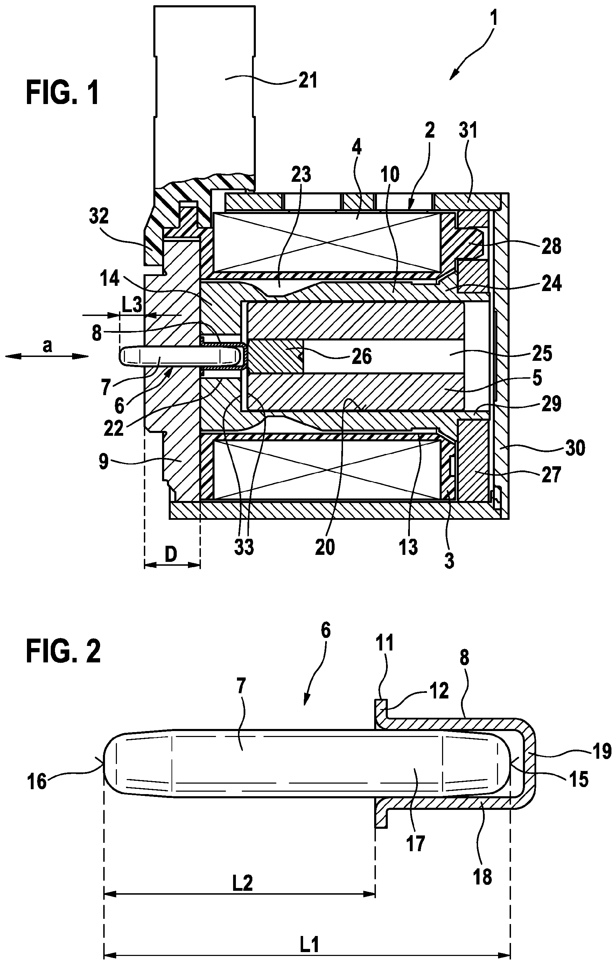

Fig. 1 zeigt ein elektromagnetisches Stellglied, welches vorzugsweise zur Ansteuerung eines nicht dargestellten Schieberventils für eine hydraulische Getriebekupplung verwandt werden kann. Eine derartige Kombination eines elektromagnetischen Stellgliedes mit einem Schieberventil ist beispielsweise aus der WO 2011/012366 A1 bekannt, so dass an dieser Stelle nicht darauf eingegangen wird. Das elektromagnetische Stellglied kann aber auch zur Betätigung eines anderen Aktuators, beispielsweise zur Betätigung eines Schaltventils in Sitzbauweise verwandt werden.

Wie in Fig. 1 erkennbar ist, umfasst das elektromagnetische Stellglied einen Elektromagneten 1, der aus einer Magnetspule 2 und einem Anker 5 besteht und der vorzugsweise ein Polrohr 10 aufweist. Die Magnetspule 2 weist einen eine Spulenwicklung 4 tragenden Spulenkörper 3 auf, der beispielsweise rotationssymmetrisch zu einer axiale Richtung a ausgebildet ist. Der Spulenkörper 3 weist beispielsweise einen in radialer Richtung davon abstehenden elektrischen Anschluss 21 auf.

In dem Spulenkörper 3 befindet sich eine vorzugsweise zylindrische Zentralausnehmung 13, welche den Spulenkörper vollständig durchdringt. Bei dem hier gezeigten Ausführungsbeispiel ist ein magnetisches Polrohr 10 in die Zentralausnehmung 13 eingeschoben. Das Polrohr 10 weist einen Zylindermantel auf, der an seinem Außenumfang mit einer Ausnehmung 23 versehen ist. Durch die Ausnehmung 23 wird der magnetische Fluss durch das Polrohr 10 beeinflusst. Das Polrohr 10 vereinigt zwei in älteren Elektromagneten verwandte Bauteile zu einem einzigen Bauteil, nämlich einen Magnetkern zur radialen Einspeisung des magnetischen Flusses in einen Anker 5 mit einem Polkern, der als zum Anker komplementärer magnetischer Pol dient. Die Ausnehmung 23 ist beispielsweise als V-förmige Nut ausgebildet und verhindert einen magnetischen Kurzschluss. Der dadurch reduzierte magentische Eisenquerschnitt in der Ausnehmung beziehungsweise Nut geht schon bei niedrigen Spulenströmen in die Sättigung über und wirkt dadurch ähnlich wie ein Luftspalt zwischen einem Magnetkern und einem Polstück. Das Ausführungsbeispiel mit Polrohr ist als eine bevorzugte Ausführungsform anzusehen. Die erfindungsgemäße Lösung ist aber nicht darauf beschränkt und kann auch bei Elektromagneten ohne Polrohr angewandt werden.

Das Polrohr 10 weist einen Zylindermantel mit einer Innenausnehmung 20 auf, die das Polrohr 10 bis zu einem magnetischen Joch 14 durchdringt, das an dem in Fig. 1 linken Ende des Polrohres ausgebildet ist. Das magnetische Joch 14 weist eine Durchgangsöffnung 22 auf. In der Innenausnehmung 20 des Polrohres 10 ist ein zylinderförmiger Anker 5 gleitverschiebbar gelagert. Der Anker 5 weist wiederum eine zentrale Innenbohrung 25 auf, in die ein Ankerbolzen 26 eingepresst ist. Der Anker 5 bewegt sich in Abhängigkeit von der elektromagentischen Kraft der Magnetspule 2 und den über ein Betätigungselement 6 und gegebenenfalls eine nicht dargestellte Feder auf den Anker 5 wirkenden Gegenkräften in der Innenausnehmung 20 des Polrohres 10 hin und her.

Am in Fig. 1 rechten stirnseitigen Ende des Spulenkörpers 3 ist eine Polscheibe 27 auf das Polrohr 10 aufgesetzt. Die Polscheibe 27 liegt an einem konusförmig vorspringenden Endbereich 24 des Polrohres auf diesem auf. Der Spulenkörper 3 wiederum greift mit einem Vorsprung 28 in die Polscheibe 27 ein. Die Polscheibe 27 weist eine zentrale kreisrunde Ausnehmung auf, durch die ein die Innenausnehmung 20 umgebender Kragen 29 des Polrohres 10 hindurchgreift. Der Anker 5 kann einfach von der rechten Seite aus in Fig. 1 in die Innenausnehmung 20 eingeschoben werden. Der Spulenkörper 3 ist von einem Gehäusemantel 31 umgeben, der an seinem in Fig. 1 rechten Ende mit einem die Polscheibe 27 abdeckenden Deckel 30 verschlossen ist.

An dem in Fig. 1 linken Ende des Spulenkörpers 3 ist ein Abschlussstück 9 auf die Stirnseite des Spulenkörpers 3 aufgebracht, welches die Zentralausnehmung 13 übergreift. Das Abschlussstück 9 bildet eine magnetische Flussscheibe aus und ist im Wesentlichen vorzugsweise scheibenförmig mit einer axialen Dicke D ausgebildet. Ein Vorsprung 32 der Kunststoffummantelung des elektrischen Anschlusses 21 umgreift das Abschlussstück 9 und fixiert dieses somit an dem Spulenkörper 3. In dem scheibenförmigen Abschlussstück 9 befindet sich eine durchgehende Bohrung die ein Gleitlager für das Betätigungselement 6 ausbildet.

Wie in Fig. 2 besser erkennbar ist, ist das Betätigungselement 6 zweitteilig ausgebildet und umfasst einen Betätigungsstift 7 und ein Trennstück 8. Der Betätigungsstift 7 wird vorzugsweise durch eine zur Verwendung in Nadelrollenlagern gefertigte, im Handel erhältliche Nadelrolle (langer zylindrischer Wälzkörper) gebildet, die besonders robust und preiswert ist. Insbesondere ist der Betätigungsstift aus gehärtetem Stahl gebildet. Die Enden des Betätigungsstiftes sind vorzugsweise abgerundet ausgebildet, wie in Fig. 2 gut zu erkennen ist. Der Betätigungsstift weist eine Länge L1 zwischen einem ersten Ende 16 und einem von dem ersten Ende 16 in der axialen Richtung a abgewandten zweiten Ende 15 auf. Ein Teil der geometrischen Erstreckung des Betätigungsstiftes 7 vor dem zweiten Ende 15 bildet einen Endabschnitt 17. Auf diesen Endabschnitt 17 ist ein topfförmiges Trennstück 8 aufgepresst oder aufgeschrumpft. Das topfförmige Trennstück 8 ist vorzugsweise als Tiefziehteil aus unmagnetischem Material gefertigt und weist einen Zylindermantel 18, einen Boden 19 und an seinem von dem Boden 19 abgewandten Ende einen seitlich abstehenden Kragen 12 auf. Das topfförmige Trennstück wird vorzugsweise aus unmagnetischem Stahl gefertigt.

Durch Aufpressen des Trennstücks 8 auf den Betätigungsstift 7 entsteht ein das Betätigungselement 6 bildendes Verbundbauteil, bei dem Trennstück 8 und Betätigungsstift 7 fest miteinander verbunden sind. Beim Aufpressen auf den Betätigungsstift 7 wird dabei ein Längenmaß L2 zwischen dem nicht in das Trennstück 8 eingeführten Ende 16 des Betätigungsstiftes 7 und dem Kragen 12 eingestellt. Das Längenmaß L2 ist in Hinblick auf die axiale Dicke D des Abschlussstückes 9 so eingestellt ist, dass der Betätigungsstift 7 bei einer Anlage des Kragens 12 an dem Abschlussstück 9 oder einem damit verbunden Bauteil um ein definiertes Abstandsmaß L3 auf der von den dem Anker 5 abgewandten Seite des Abschlussstücks 9 aus diesem hervorsteht, wie insbesondere in Fig. 1 gut zu erkennen ist.

In Fig. 1 ist erkennbar, dass der Anker 5 bei einer Betätigung der Magnetspule in dem Polrohr 10 nach links zu dem Joch 14 hin gezogen wird. Dadurch findet eine Annäherung der sich einander zugewandten Polflächen 33 des Jochs 14 und des Ankers 5 statt und der Anker 5 gelangt mit dem fest in dem Anker eingepressten Ankerbolzen 26 an dem Boden 19 des Trennstücks 8 zur Anlage und bewegt dieses in Fig. 1 nach links bis der Kragen 12 an dem Abschlussstück 9 wie dargestellt anliegt. Der mit dem Trennstück 8 fest verbundene Betätigungsstift 7 wird dadurch in seiner Lagerbohrung am Abschlussstück 9 nach links verschoben bis er mit dem Abstandsmaß L3 auf der von dem Anker abgewandten Seite des Abschlussstücks 9 aus diesem hervorsteht. In dieser Stellung kann der Betätigungsstift 7 nicht mehr weiter nach links verschoben werden und der Anker 5 drückt nun das Trennstück 8 mit dem Kragen 12 gegen das Abschlussstück 9 an. Dadurch trennt das unmagnetische Trennstück 8 die Polflächen 33 von Joch und Anker. Da das Trennstück 8 aus unmagnetischem Material besteht wird ein magnetisches Kleben an dem magnetischen Abschlussstück 9 oder dem Anker 5 vermieden. Vorteilhaft weist das Trennstück 8 eine Elastizität auf, um den Stoß durch Anschlag an dem Abschlussstück 9 zu dämpfen. In Fig. 1 ist erkennbar, dass der Durchmesser der Durchgangsöffnung 22 des Jochs 14 des Polrohres 10 so groß ausgebildet ist, dass das Trennstück 8 mit dem seitlich abstehenden Kragen 12 problemlos darin hin und her bewegt werden kann. Das Abstandsmaß L3 wird benötigt um beispielsweise einen Schieberkolben in einem Druckregelventil zu verschieben. Dieser Schieberkolben kann beispielsweise federbeaufschlagt sein, so dass bei Abschaltung des Elektromagneten 1 der federbeaufschlagte Schieberkolben den Betätigungsstift mit dem Trennstück in Fig. 1 nach rechts drückt und der Anker 5 zurück in sein Ausgangslage verschoben wird. Die Rückstellung kann aber auch in anderer Weise erfolgen.

Es versteht sich, dass der Kragen 12 des Trennstücks 8 nicht zwingend an dem Abschlussstück 9 zur Anlage gelangen muss, sondern dass es auch möglich ist, diesen Kragen an einem nicht dargestellten Zwischenbauteil, beispielsweise einer Scheibe oder aber einem Vorsprung des Polrohres 10 zur Anlage gelangen zu lassen. Anstelle des topfförmigen Trennstücks kann auch ein andersartig ausgebildetes Trennstück verwandt werden. Der Kragen 12 kann gegebenenfalls durch einen seitlichen Noppen oder Vorsprung an dem Trennstück ersetzt werden. Anstelle des Polrohres kann beispielsweise ein anderer Aufbau des Elektromagneten mit Magnetkern, Polkern und einer Hülse gewählt werden, in der der Anker gleitverschiebbar angeordnet ist.

## Patentansprüche

1. Elektromagnetisches Stellglied, aufweisend eine Magnetspule (2), welche einen Spulenkörper (3) mit einer daran angeordneten Spulenwicklung (4) und eine sich in einer axialen Richtung (a) erstreckende Zentralausnehmung (13) aufweist, einen in der Zentralausnehmung (13) verschiebbar angeordneten Anker (5) sowie ein an einem axialen Ende des Spulenkörpers (3) angeordnetes Abschlussstück (9), in dem ein Betätigungselement (6) in der axialen Richtung (a) verschiebbar gelagert ist, wobei der Anker (5) durch einer Betätigung der Magnetspule (2) bewegbar ist, so dass eine von dem Anker (5) des elektromagnetischen Stellgliedes aufgebrachte Kraft auf das Betätigungselement (6) übertragbar ist, wobei das Betätigungselement (6) zweiteilig ausgebildet ist und einen in dem Abschlussstück (9) gelagerten Betätigungsstift (7) sowie ein Trennstück (8) aufweist, das an einem aus dem Abschlussstück (9) in Richtung des Ankers (5) vorstehenden Endabschnitt (17) des Betätigungsstiftes (7) fest mit dem Betätigungsstift (7) verbundenen ist und bei einer Betätigung der Magnetspule (2) von dem Anker (5) beaufschlagt ist, wobei das Trennstück (8) aus einem unmagnetischen Material, insbesondere aus unmagnetischem Stahl hergestellt ist,
**dadurch gekennzeichnet, dass** der Betätigungsstift (7) mit dem Anker (5) nicht fest verbunden ist und über eine eigene Lagerung unabhängig vom Lager des Ankers (5) verfügt.

2. Elektromagnetisches Stellglied nach Anspruch 1, **dadurch gekennzeichnet, dass** das Trennstück (8) topfförmig ausgebildet ist.

3. Elektromagnetisches Stellglied nach Anspruch 1, **dadurch gekennzeichnet, dass** das Trennstück (8) zumindest einen seitlich abstehenden Vorsprung (11) aufweist, welcher bei einer Beaufschlagung des Trennstücks (8) durch den Anker (5) durch Anlage an dem Abschlussstück (9) oder einem damit verbunden Bauteil den maximalen Verschiebungsweg des Betätigungsstiftes (7) in dem Abschlussstück (9) begrenzt.

4. Elektromagnetisches Stellglied nach Anspruch 2 , **dadurch gekennzeichnet, dass** der Betätigungsstift (7) mit seinem in Richtung des Ankers (5) aus dem Abschlussstück (9) vorstehende Endabschnitt (17) in das topfförmige Trennstück (8) eingesetzt ist.

5. Elektromagnetisches Stellglied nach Anspruch 4 , **dadurch gekennzeichnet, dass** das topfförmige Trennstück (8) auf den Betätigungsstift (7) aufgepresst oder aufgeschrumpft ist.

6. Elektromagentisches Stellglied nach einem der Anspruch 5 , **dadurch gekennzeichnet, dass** das topfförmige Trennstück (8) einen Zylindermantel (18), einen Boden (19) und an seinem von dem Boden (19) abgewandten Ende einen seitlich abstehenden Kragen (12) aufweist, der bei einer Beaufschlagung des Trennstücks (8) durch den Anker (5) durch Anlage an dem Abschlussstück (9) oder einem damit verbunden Bauteil den maximalen Verschiebungsweg des Betätigungsstiftes (7) in dem Abschlussstück (9) begrenzt.

7. Elektromagentisches Stellglied nach Anspruch 6 , **dadurch gekennzeichnet, dass** der Betätigungsstift (7) eine Länge (L1) aufweist und dass topfförmige Trennstück (8) auf den Betätigungsstift (7) soweit aufgepresst oder aufgeschrumpft ist, dass der Abstand zwischen dem Kragen (12) und einem von dem Anker (5) abgewandten Ende (16) des Betätigungsstiftes (7) ein Längenmaß (L2) bilden, das in Hinblick auf die axiale Dicke (D) des Abschlussstückes (9) so eingestellt ist, dass der Betätigungsstift (7) bei Anlage des Kragens (12) an dem Abschlussstück (9) oder einem damit verbunden Bauteil um ein definiertes Abstandsmaß (L3) auf der von den dem Anker (5) abgewandten Seite des Abschlussstücks aus diesem hervorsteht.

8. Elektromagnetisches Stellglied nach Anspruch 1, **dadurch gekennzeichnet, dass** ein in die Zentralausnehmung (13) des Spulenkörpers (3) eingesetztes Polrohr (10) vorgesehen ist, an dessen Außenumfang eine Ausnehmung (23) ausgebildet ist, wobei der Anker (5) in dem Polrohr (10) verschiebbar gelagert ist und ein dem Anker (5) auf der Seite des Abschlusstückes (9) zugewandtes Ende des Polrohres (10) ein einstückig an dem Polrohr (10) ausgebildetes Joch (14) aufweist, wobei in dem Joch (14) eine Durchgangsöffnung (22) ausgebildet ist, deren Durchmesser derart bemessen ist, dass das Trennstück (8) in der Durchgangsöffnung (22) hin und her beweglich ist.

9. Elektromagnetisches Druckregelventil, insbesondere zur Einstellung eines Hydraulikdrucks in einer Hydraulikleitung eines Kraftfahrzeuggetriebes mit einem elektromagnetischen Stellglied nach einem der Ansprüche 1 bis 8 .

## Claims

1. Electromagnetic actuator having a magnet coil (2), which has a coil former (3) with a coil winding (4) arranged thereon and a central recess (13) which extends in an axial direction (a), and an armature (5) which is arranged such that it can be displaced in the central recess (13) and also a termination piece (9) which is arranged at an axial end of the coil former (3) and in which an operating element (6) is mounted such that it can be displaced in the axial direction (a), wherein the armature (5) can be moved by operation of the magnet coil (2), so that a force which is applied by the armature (5) of the electromagnetic actuator can be transmitted to the operating element (6), wherein the operating element (6) is of two-part design and has an operating pin (7), which is mounted in the termination piece (9), and also a separating piece (8) which is fixedly connected to the operating pin (7) at an end section (17) of the operating pin (7) that protrudes out of the termination piece (9) in the direction of the armature (5) and which is acted on by the armature (5) when the magnet coil (2) is operated, wherein the separating piece (8) is produced from a non-magnetic material, in particular from non-magnetic steel, **characterized in that** the operating pin (7) is not fixedly connected to the armature (5) and has its own bearing arrangement independently of the bearing of the armature (5).

2. Electromagnetic actuator according to Claim 1, **characterized in that** the separating piece (8) is of pot-like design.

3. Electromagnetic actuator according to Claim 1, **characterized in that** the separating piece (8) has at least one laterally protruding projection (11) which limits the maximum displacement movement of the operating pin (7) in the termination piece (9) when the separating piece (8) is acted on by the armature (5) by way of bearing against the termination piece (9) or a component which is connected to it.

4. Electromagnetic actuator according to Claim 2, **characterized in that** the operating pin (7) is inserted, by way of its end section (17) which projects in the direction of the armature (5) out of the termination piece (9), into the pot-like separating piece (8).

5. Electromagnetic actuator according to Claim 4, **characterized in that** the pot-like separating piece (8) is pressed or shrink-fitted onto the operating pin (7).

6. Electromagnetic actuator according to one of Claim 5, **characterized in that** the pot-like separating piece (8) has a cylindrical jacket (18), a base (19) and, at its end which is averted from the base (19), a laterally protruding collar (12) which limits the maximum displacement movement of the operating pin (7) in the termination piece (9) when the separating piece (8) is acted on by the armature (5) by way of bearing against the termination piece (9) or a component which is connected to it.

7. Electromagnetic actuator according to Claim 6, **characterized in that** the operating pin (7) has a length (L1) and the pot-like separating piece (8) is pressed or shrink-fitted onto the operating pin (7) to such an extent that the distance between the collar (12) and an end (16) of the operating pin (7) that is averted from the armature (5) form a length dimension (L2) which is set in respect of the axial thickness (D) of the termination piece (9) such that the operating pin (7) protrudes out of it when the collar (12) bears against the termination piece (9) or a component which is connected to it by a defined distance dimension (L3) on that side of the termination piece which is averted from the armature (5).

8. Electromagnetic actuator according to Claim 1, **characterized in that** a pole tube (10) which is inserted into the central recess (13) of the coil former (3) is provided, a recess (23) being formed on the outer circumference of the said pole tube, wherein the armature (5) is mounted such that it can be displaced in the pole tube (10) and an end of the pole tube (10), which end faces the armature (5) on the side of the termination piece (9), has a yoke (14) which is formed in one piece on the pole tube (10), wherein a passage opening (22) is formed in the yoke (14), the diameter of which passage opening is dimensioned in such a way that the separating piece (8) can be moved back and forth in the passage opening (22).

9. Electromagnetic pressure control valve, in particular for setting a hydraulic pressure in a hydraulic line of a motor vehicle transmission, comprising an electromagnetic actuator according to one of Claims 1 to 8.

## Revendications

1. Actionneur électromagnétique, présentant une bobine magnétique (2), qui présente un corps de bobine (3) et un enroulement de bobine (4) disposé sur celui-ci et un évidement central (13) s'étendant dans une direction axiale (a), un induit (5) disposé de façon déplaçable dans l'évidement central (13) ainsi qu'une pièce terminale (9) disposée à une extrémité axiale du corps de bobine (3), dans laquelle un élément d'actionnement (6) est supporté de façon mobile dans la direction axiale (a), dans lequel l'induit (5) peut être déplacé par un actionnement de la bobine magnétique (2), de telle manière qu'une force appliquée par l'induit (5) de l'actionneur électromagnétique puisse être transmise à l'élément d'actionnement (6), dans lequel l'élément d'actionnement (6) est réalisé en deux parties et présente une tige d'actionnement (7) supportée dans la pièce terminale (9) ainsi qu'une pièce de séparation (8), qui est solidement assemblée à la tige d'actionnement (7) dans une partie d'extrémité (17) de la tige d'actionnement (7) sortant hors de la pièce terminale (9) en direction de l'induit (5) et qui est poussée par l'induit (5) lors d'un actionnement de la bobine magnétique (2), dans lequel la pièce de séparation (8) est fabriquée en un matériau amagnétique, en particulier en acier amagnétique,
**caractérisé en ce que** la tige d'actionnement (7) n'est pas solidement assemblée à l'induit (5) et dispose d'un appui propre indépendant du palier de l'induit (5).

2. Actionneur électromagnétique selon la revendication 1, **caractérisé en ce que** la pièce de séparation (8) est réalisée en forme de godet.

3. Actionneur électromagnétique selon la revendication 1, **caractérisé en ce que** la pièce de séparation (8) présente au moins une saillie (11) saillante latéralement, qui lors d'une poussée de la pièce de séparation (8) par l'induit (5) limite la course de déplacement maximale de la tige d'actionnement (7) dans la pièce terminale (9) par appui sur la pièce terminale (9) ou sur une pièce assemblée à celle-ci.

4. Actionneur électromagnétique selon la revendication 2, **caractérisé en ce que** la tige d'actionnement (7) est introduite dans la pièce de séparation en forme de godet (8) avec sa partie d'extrémité (17) saillante hors de la pièce terminale (9) en direction de l'induit (5).

5. Actionneur électromagnétique selon la revendication 4, **caractérisé en ce que** la pièce de séparation en forme de godet (8) est pressée ou rétreinte sur la tige d'actionnement (7).

6. Actionneur électromagnétique selon l'une de la revendication 5, **caractérisé en ce que** la pièce de séparation en forme de godet (8) présente une paroi latérale cylindrique (18), un fond (19) et à son extrémité éloignée du fond (19) un collet saillant latéralement (12), qui lors d'une poussée de la pièce de séparation (8) par l'induit (5) limite la course de déplacement maximale de la tige d'actionnement (7) dans la pièce terminale (9) par appui sur la pièce terminale (9) ou sur une pièce assemblée à celle-ci.

7. Actionneur électromagnétique selon la revendication 6, **caractérisé en ce que** la tige d'actionnement (7) présente une longueur (L1) et la pièce de séparation en forme de godet (8) est pressée ou rétreinte sur la tige d'actionnement (7) de telle manière que la distance entre le collet (12) et une extrémité (16) de la tige d'actionnement (7) à l'opposé de l'induit (5) forme une dimension de longueur (L2), qui est réglée par rapport à l'épaisseur axiale (D) de la pièce terminale (9) de telle manière que la tige d'actionnement (7) soit saillante d'une mesure de distance définie (L3) hors de la pièce terminale sur le côté de celle-ci à l'opposé de l'induit (5) lors de l'appui du collet (12) sur la pièce terminale (9) ou sur une pièce assemblée à celle-ci.

8. Actionneur électromagnétique selon la revendication 1, **caractérisé en ce qu'**il est prévu un tube polaire (10) introduit dans l'évidement central (13) du corps de bobine (3), dont la périphérie extérieure est dotée d'un évidement (23), dans lequel l'induit (5) est supporté de façon déplaçable dans le tube polaire (10) et une extrémité du tube polaire (10) tournée vers l'induit (5) sur le côté de la pièce terminale (9) présente une armature (14) formée d'une pièce sur le tube polaire (10), dans lequel une ouverture de passage (22) est formée dans l'armature (14), dont le diamètre est dimensionné de telle manière que la pièce de séparation (8) soit mobile réciproquement dans l'ouverture de passage (22).

9. Soupape électromagnétique de réglage de pression, en particulier pour le réglage d'une pression hydraulique dans une conduite hydraulique d'une boîte de vitesses d'un véhicule automobile avec un actionneur électromagnétique selon l'une quelconque des revendications 1 à 8.
